# EUROPÄISCHE PATENTSCHRIFT

(11) **EP 2 107 657 B1**
(45) Veröffentlichungstag und Bekanntmachung des Hinweises auf die Patenterteilung: **08.01.2020**
(21) Anmeldenummer: 09156372.6
(22) Anmeldetag: 26.03.2009
(51) Int. Cl.: H02G 3/06

(54) **Kabelverschraubung**
Cable connection
Dispositif de fixation de câble

(30) Priorität: 01.04.2008 DE 102008018176
(43) Veröffentlichungstag der Anmeldung: 07.10.2009
(73) Patentinhaber: Lapp Engineering & Co., 6330 Cham (CH)
(72) Erfinder: Drotleff, Rolf, 71263 Weil der Stadt (DE); Zankl, Martin, 71364 Winnenden (DE)
(74) Vertreter: Hoeger, Stellrecht & Partner Patentanwälte mbB

(56) Entgegenhaltungen:
- AT-B- 406 619
- US-A- 6 069 320
- US-B1- 6 639 146

## Beschreibung

Die Erfindung betrifft eine Kabelverschraubung umfassend eine Gehäuseeinheit mit einer Gehäusehülse und mit einer auf die Gehäusehülse aufschraubbaren Hutmutter und eine in der Gehäuseeinheit angeordnete Halteeinheit mit einer Führungshülse, mit mindestens einem sich ausgehend von der Führungshülse erstreckenden Lamellenkorb, wobei die Halteeinheit zwei Lamellenkörbe aufweist, die sich auf gegenüberliegenden Seiten der Führungshülse ausgehend von dieser in entgegengesetzten Richtungen parallel zu einer Mittelachse der Gehäuseeinheit erstrecken und die beide durch die Gehäuseeinheit beaufschlagbar sind.

Derartige Kabelverschraubungen sind aus der AT 406 619 B bekannt.

Aus der US 6,069,320 A ist eine Kabelverschraubung bekannt bei welcher die Halteeinheit mit zwei Lamellenkörben mit Klemmdichtringen versehen ist. Der Erfindung liegt daher die Aufgabe zugrunde, eine Kabelverschraubung der gattungsgemäßen Art derart zu verbessern, dass eine erhöhte Langzeitdichtigkeit der Kabeldurchführung gegeben ist.

Diese Aufgabe wird durch die Merkmale des Anspruchs 1 gelöst.

Insbesondere ist erfindungsgemäß vorgesehen, dass in jedem Lamellenkorb ein elastischer Klemmdichtring sitzt, der durch den jeweiligen Lamellenkorb radial zur Mittelachse in Richtung des durchgeführten Kabels beaufschlagbar ist.

Der Vorteil der erfindungsgemäßen Lösung ist darin zu sehen, dass durch die beiden Lamellenkörbe bereits eine steifere Führung und eine bessere Zugentlastung des Kabels in der Kabelverschraubung erfolgt, nämlich dadurch, dass das Kabel an zwei im Abstand voneinander angeordneten Bereichen gehalten ist, und das außerdem noch dadurch, dass in jedem der Lamellenkörbe ein Klemmdichtring angeordnet ist, auch noch die Dichtigkeit der Kabelverschraubung verbessert wird, die einerseits daraus resultiert, dass das Kabel keine Kippbewegung mehr durchführen kann und außerdem dadurch resultiert, dass zwei Klemmdichtringe zur Abdichtung am Kabelmantel zur Verfügung stehen.

Um ferner die Führungshülse relativ zu der Gehäuseeinheit abdichten zu können, ist ferner erfindungsgemäß die Führungshülse mit einem radial wirkenden Dichtelement versehen, das mit einer Dichtfläche an einer zylindrischen Innenfläche der Gehäusehülse dicht abschließend anlegbar ist.

Hinsichtlich der Anordnung der Halteeinheit in der Gehäuseeinheit wurden bislang keine näheren Angaben gemacht.

Beispielsweise könnte die Halteeinheit wie bei den bekannten Kabelverschraubungen in der Gehäuseeinheit fixiert angeordnet sein.

Eine vorteilhafte Lösung sieht jedoch vor, dass die Halteeinheit in Richtung einer Mittelachse der Gehäuseeinheit verschiebbar in der Gehäuseeinheit angeordnet ist.

Besonders vorteilhaft ist dabei eine Lösung, bei welcher die Halteeinheit zwischen jeweils auf einen der Lamellenkörbe wirkenden Druckflächen der Gehäuseeinheit angeordnet ist und sich entsprechend eines Abstandes der Druckflächen in Richtung parallel zur Mittelachse zwischen diesen ausrichtet, nämlich dadurch, dass die Halteeinheit in der Gehäuseeinheit verschiebbar angeordnet ist.

Damit besteht die Möglichkeit, beide Lamellenkörbe im Wesentlichen gleichmäßig zu beaufschlagen, wobei durch das Verschieben der Halteeinheit in Richtung der Mittelachse eine im Wesentlichen gleichmäßige Beaufschlagung beider Lamellenkörbe mit den entsprechenden Druckflächen möglich ist.

So sieht eine vorteilhafte Lösung vor, dass eine Druckfläche der Gehäuseeinheit an der Hutmutter angeordnet ist. Damit lässt sich in einfacher Weise diese Druckfläche relativ zur Gehäusehülse verschieben, da durch Aufschrauben der Hutmutter auf die Gehäusehülse die an dieser angeordnete Druckfläche mitwandert.

Eine andere vorteilhafte Lösung sieht vor, dass eine Druckfläche der Gehäuseeinheit an der Gehäusehülse angeordnet ist. In diesem Fall ist vorzugsweise vorgesehen, dass die Druckfläche im Wesentlichen stationär an der Gehäusehülse angeordnet ist.

Dabei könnte die Druckfläche unmittelbar an der Gehäusehülse selbst angeordnet sein.

Eine vorteilhafte Lösung sieht jedoch vor, dass die Druckfläche der Gehäuseeinheit an einem in der Gehäusehülse vorgesehenen Keilring angeordnet ist. Auch dieser Keilring könnte in die Gehäusehülse eingeformt sein.

Aus Gründen eines modularen Aufbaus ist es jedoch vorteilhaft, wenn der Keilring in die Gehäusehülse einsetzbar ist.

Besonders zweckmäßig ist daher eine Lösung, bei welcher ein Lamellenkorb der Halteeinheit durch die Druckfläche der Hutmutter beaufschlagbar ist und der andere Lamellenkorb aufgrund der Verschiebung der Halteeinheit in Richtung der Mittelachse durch die Druckfläche der Gehäusehülse beaufschlagbar ist.

Die Druckflächen selbst können dabei in unterschiedlichster Art und Weise ausgebildet sein. Beispielsweise wäre es bei entsprechend ausgebildeten Lamellenkörben denkbar, die Druckflächen als Anlagenkanten oder als gewölbte Flächen auszubilden.

Eine herstellungstechnisch einfache Lösung sieht vor, dass die Druckflächen Innenkonusflächen sind, da diese sehr einfach herstellbar sind.

So sieht eine vorteilhafte Lösung vor, dass die Klemmdichtringe mit der Führungshülse dichtend abschließen, das heißt, dass zumindest im beaufschlagten Zustand die Klemmdichtringe derart an der Führungshülse anliegen, dass die Klemmdichtringe mit der Führungshülse einen dichten Abschluss bilden, so dass die Klemmdichtringe insgesamt sowohl am Kabel dicht abschließend anliegen, als auch an der Führungshülse.

Im Zusammenhang mit den bislang beschriebenen Ausführungsbeispielen wurde nicht näher auf die Art der Klemmdichtringe und deren Montage eingegangen.

Beispielsweise können die Klemmdichtringe als selbstständige Teile hergestellt sein, die in die Lammellenkörbe eingesetzt werden.

Eine andere vorteilhafte Lösung sieht vor, dass die Klemmdichtringe an die Halteeinheit angeformt sind.

Ein derartiges Anformen der Klemmdichtringe an die Halteeinheit hat den Vorteil, dass damit die Klemmdichtringe an der Halteeinheit durch das Anformen fixiert sind und somit einerseits nicht mehr als selbstständige Teile eingesetzt werden müssen und andererseits an der Halteeinheit fixiert bleiben und somit nicht verloren gehen können.

Ein derartiges Anformen erfolgt beispielsweise im Rahmen eines Zwei-Komponentenspritzverfahrens.

Um ferner noch die Abdichtung zwischen den Klemmdichtringen und der Führungshülse zu verbessern, sieht eine vorteilhafte Lösung vor, dass die Klemmdichtringe durch ein Verbindungsstück miteinander verbunden sind. In diesem Fall sind beide Klemmdichtringe durch das Verbindungsstück zu einem einzigen Teil miteinander verbunden und eröffnen somit die Möglichkeit, die Abdichtung zwischen dem Kabel und Führungshülse noch weiter zu verbessern.

Dabei können die beiden durch ein Verbindungsstück verbundenen Klemmdichtringe ein zusammenhängendes Teil bilden, das in die Halteeinheit eingesetzt ist oder - noch besser - an die Halteeinheit angeformt sein, so dass in diesem Fall die beiden Klemmdichtringe mit dem Verbindungsstück an der Halteeinheit fest fixiert sind.

Ein derartiges Anformen der Klemmdichtringe und gegebenenfalls des Verbindungsstücks an die Halteeinheit kann in unterschiedlichster Art und Weise erfolgen. Eine zweckmäßige Lösung sieht ein Anformen im Rahmen eines Zwei-Komponentenspritzverfahrens vor.

Ein erfindungsgemäßes radial wirkendes Dichtelement kann in unterschiedlichster Art und Weise ausgebildet sein.

Beispielsweise könnte ein derartiges Dichtelement als eine Art Lippendichtung ausgebildet sein.

Eine vorteilhafte Lösung sieht jedoch vor, dass das Dichtelement einen elastischen Kern aufweist, welcher aufgrund der Deformierbarkeit dazu eingesetzt werden kann, die Dichtfläche kraftbeaufschlagt an der Innenfläche der Gehäusehülse anzulegen.

Vorzugsweise ist dabei die Dichtfläche so angeordnet, dass sie unmittelbar in radialer Richtung durch den elastischen Kern beaufschlagbar ist.

Um jedoch durch die an der zylindrischen Innenfläche der Gehäusehülse anliegende Dichtfläche die Bewegbarkeit der Halteeinheit in Richtung der Mittelachse nicht zu stark zu behindern, sondern ein möglichst leichtes Gleiten der Halteeinheit innerhalb der Gehäuseeinheit in Richtung der Mittelachse zuzulassen, ist vorzugsweise vorgesehen, dass das Dichtelement mit einer die Dichtfläche tragenden Gleitbeschichtung versehen ist.

Eine derartige Gleitbeschichtung kann aus einer Vielzahl denkbarer Materialien hergestellt sein.

Ein vorteilhaftes Ausführungsbeispiel sieht vor, dass die Gleitbeschichtung eine Beschichtung aus PTFE ist.

Um die Abdichtung weiter zu verbessern, ist vorzugsweise vorgesehen, dass die Führungshülse mit zwei radial wirkenden Dichtelementen dicht abschließend an der Innenfläche der Gehäusehülse anlegbar ist.

Besonders vorteilhaft ist es dabei, wenn die beiden Dichtelemente in Richtung der Mittelachse im Abstand voneinander angeordnet sind.

So sieht eine vorteilhafte Lösung vor, dass die Dichtelemente in einer Vertiefung in der Führungshülse, beispielsweise einer Ringnut, angeordnet sind. Die Dichtelemente können dabei im Rahmen der erfindungsgemäßen Lösung als selbstständige Teile in den entsprechenden Aufnahmen der Führungshülse eingesetzt sein.

Eine besonders vorteilhafte Lösung sieht vor, dass die Dichtelemente an die Führungshülse angeformt sind.

Ein derartiges Anformen der Dichtelemente hat den Vorteil, dass einerseits die Abdichtung zwischen den Dichtelementen und der Führungshülse verbessert wird und andererseits ein einfacheres Herstellen, insbesondere mit hohem Automatisierungsgrad, möglich ist. Besonders vorteilhaft ist es dabei, wenn die Dichtelemente an die Halteeinheit im Rahmen eines Zwei-Komponentenspritzverfahrens angeformt sind.

Besonders günstig ist es dabei, wenn die Dichtelemente im Zusammenhang mit den Klemmdichtringen an die Halteeinheit angeformt sind, so dass ein derartiges Anformen im Rahmen eines Zwei-Komponentenspritzverfahrens in einem Verfahrensschritt erfolgen kann.

Beim Vorsehen von Dichtelementen müssen diese, um eine günstige Dichtwirkung zu gewährleisten, über die Führungshülse radial überstehen.

Damit wäre bei einer derartigen Kabelvorrichtung die Führungshülse primär über die Dichtelemente an der Gehäusehülse abgestützt.

Dies hätte jedoch zur Folge, dass dadurch die Dichtelemente auch zusätzlichen auf das Kabel wirkenden mechanischen Kräften ausgesetzt wäre und bei ungünstiger Kraftwirkung des Kabels auf die Halteeinheit könnte die Dichtwirkung der Dichtelemente beeinträchtigt werden.

Aus diesem Grund sieht eine vorteilhafte Lösung vor, dass die Halteeinheit durch in radialer Richtung zur Mittelachse über die Führungshülse überstehende Erhebungen an der Gehäusehülse geführt ist.

Mit diesen Erhebungen liegt somit eine zusätzliche Abstützung der Führungshülse relativ zur Gehäusehülse vor, die unabhängig ist von der abstützenden Wirkung der Dichtelemente.

Diese Erhebungen können sich in unterschiedlicher Art und Weise an der Gehäusehülse abstützen.

Eine vorteilhafte Lösung sieht vor, dass die Erhebungen an der für das mindestens eine Dichtelement als Anlagefläche dienenden zylindrischen Innenfläche der Gehäusehülse anliegen, so dass hierzu von der Gehäusehülse keine zusätzlichen Flächen geschaffen werden müssen, sondern die ohnehin vorhandene Innenfläche der Gehäusehülse hierzu eingesetzt werden kann.

Um mit den Erhebungen die Führungshülse so abzustützen, dass die Abstützung im Wesentlichen entsprechend einer Passung, das heißt insbesondere im Wesentlichen spielfrei, erfolgt, ist vorzugsweise vorgesehen, dass die Erhebungen aus einem beim Einführen der Halteeinheit in die Gehäuseeinheit sich an eine Form der Innenfläche durch Abtrag und/oder Deformation anpassenden Material sind.

Eine derartige Lösung hat den Vorteil, dass somit eine passgenaue Führung der Führungshülse in der Gehäuseeinheit realisierbar ist, wobei sich die passgenaue Führung allen Herstellungstoleranzen der Innenfläche oder der Form der Innenfläche dadurch anpasst, dass die Erhebungen beim Einführen der Halteeinheit in die Gehäuseeinheit soweit abgetragen und/oder deformiert werden, bis eine passgenaue Führung der Halteeinheit in der Gehäuseeinheit gegeben ist.

Vorzugsweise sind dabei die Erhebungen so ausgebildet, dass der Materialabtrag und/oder die Deformation in zunehmendem radialem Abstand von der Führungshülse leichter möglich sind.

Eine derartige Form der Erhebungen ist beispielsweise dadurch realisierbar, dass die Erhebungen ausgehend von einem Fußbereich in Richtung einer Spitze sich verjüngend verlaufen, so dass bei den Erhebungen mit zunehmend geringer werdendem Abstand von der Führungshülse stets mehr Material abgetragen und/oder deformiert werden muss. Dies führt dazu, dass beim Einführen der Führungshülse in die Gehäusehülse der Abtrag und/oder die Deformation im Bereich der Erhebungen so erfolgen, dass die Führungshülse im Wesentlichen zentriert in der Innenfläche geführt ist, da stets ein Abtrag und/oder eine Deformation im Bereich der Erhebung erfolgt, bei der der Materialabtrag und/oder die Deformation am leichtesten möglich sind.

So sieht eine vorteilhafte Lösung vor, dass die Erhebungen an im Abstand voneinander angeordneten Stützschultern der Führungshülse vorgesehen sind. Beispielsweise sind dabei an jeder Stützschulter mehrere über den Umfang verteilt angeordnete Erhebungen vorgesehen, wobei die Erhebungen vorzugsweise gleichmäßig über den Umfang der Stützschulter verteilt angeordnet sind.

Die einfachste Lösung sieht hierbei vor, dass an jede Stützschulter mindestens drei über den Umfang verteilte Erhebungen vorgesehen sind.

Noch besser ist es jedoch, wenn mehr als drei, das heißt mindestens vier oder mindestens fünf, über den Umfang verteilte Erhebungen vorgesehen sind.

Vorzugsweise ist vorgesehen, dass die Stützschultern zwischen einem Dichtelement und dem jeweils nächstliegenden Lamellenkorb angeordnet sind, so dass primär eine Abstützung der Führungshülse über die Stützschulter mit den Erhebungen erfolgt und die Dichtelemente in Richtung der Mittelachse gesehen zwischen den Stützschultern liegen.

Um im Bereich der Kabelverschraubung einen Kabelschirm kontaktieren zu können, ist vorzugsweise vorgesehen, dass in der Gehäuseeinheit ein Schirmkontaktelement angeordnet ist.

Ein derartiges Schirmkontaktelement ist vorzugsweise in einer Aufnahme angeordnet, die nahe einem Montageansatz der Gehäusehülse vorgesehen ist. Beispielsweise ist die Aufnahme so ausgebildet, dass sie einen radial zur Mittelachse nach innen überstehenden Flansch umfasst.

Ferner ist vorzugsweise vorgesehen, dass das Schirmkontaktelement zwischen dem Flansch und dem Keilring angeordnet ist.

So ist vorzugsweise vorgesehen, dass das Schirmkontaktelement ein Element mit federnden Fingern, insbesondere ein Borstenelement, ist.

Insbesondere ist dieses Borstenelement so ausgebildet, dass es in Richtung der Mittelachse der Gehäuseeinheit vorstehende Kontaktborsten aufweist, welche an einen Kabelschirm anlegbar und mit diesen in elektrischen leitenden Kontakt bringbar sind.

Vorzugsweise sind dabei die Kontaktborsten aus Metall ausgebildet.

Hinsichtlich des Aufbaus des Schirmkontaktelements sieht eine zweckmäßige Lösung vor, dass ein Kontaktborstenträger einen Träger des Schirmkontaktelements U-förmig umgreift.

Um bei der erfindungsgemäßen Lösung die Gehäusehülse mit oder ohne Schirmkontaktelement einsetzen zu können, ist vorzugsweise vorgesehen, dass die Gehäusehülse in einem dem Montageansatz zugewandten Bereich eine Schulter aufweist, an welcher der Keilring abstützbar ist.

Dabei ist die Schulter zweckmäßigerweise so ausgebildet, dass sie bei fehlendem Schirmkontaktelement den Keilring in Richtung parallel zur Mittelachse abstützt.

Andererseits ist im Fall eines Schirmkontaktelements vorgesehen, dass der Keilring nicht auf der Schulter anliegt, sondern sich über das Schirmkontaktelement an dem abstützenden Flansch abstützt.

Bei Kabelverschraubungen, bei denen ein dauerhaftes Klemmen mit der Halteeinheit erfolgen soll, ist es notwendig, dass die beim Aufschrauben der Hutmutter erzeugte Kraft zumindest teilweise über einen elastischen Kraftspeicher gespeichert wird und somit die in dem elastischen Kraftspeicher gespeicherte Kraft dauerhaft zum Klemmen des Kabels zur Verfügung steht.

Aus diesem Grund ist bei einem Ausführungsbeispiel der erfindungsgemäßen Kabelverschraubung vorgesehen, dass die Klemmdichtringe in den Lamellenkörben beim Zusammenwirken der Gehäuseeinheit in der Halteeinheit ein elastisches, die Klemmung und Dichtung aufrecht erhaltendes Element bilden.

Das heißt sie bilden einen elastischen Kraftspeicher, welcher die auf das Kabel zum Klemmen erforderliche Kraft ständig aufrecht erhält, so dass auch bei maßlichen Veränderungen, z.B. durch Wärmeausdehnung, noch zur Verfügung steht.

Eine konstruktiv besonders einfache und zweckmäßige Ausführungsform sieht vor, dass die Klemmdichtringe die einzigen elastischen Elemente beim Zusammenwirken der Gehäuseeinheit und der Halteeinheit bilden.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise aufgebrochene Darstellung eines ersten Ausführungsbeispiels einer erfindungsgemäßen Kabelverschraubung;
- Fig. 2: einen Schnitt durch einen Teilbereich einer Führungshülse am Ort eines Dichtelements;
- Fig. 3: eine ausschnittsweise vergrößerte Darstellung eines Bereichs der Führungshülse mit einer Erhebung;
- Fig. 4: eine Ansicht ähnlich Fig. 1 eines zweiten Ausführungsbeispiels einer erfindungsgemäßen Kabelverschraubung und
- Fig. 5: eine Ansicht ähnlich Fig. 1 einer Halteeinheit eines dritten Ausführungsbeispiels einer erfindungsgemäßen Kabelverschraubung.

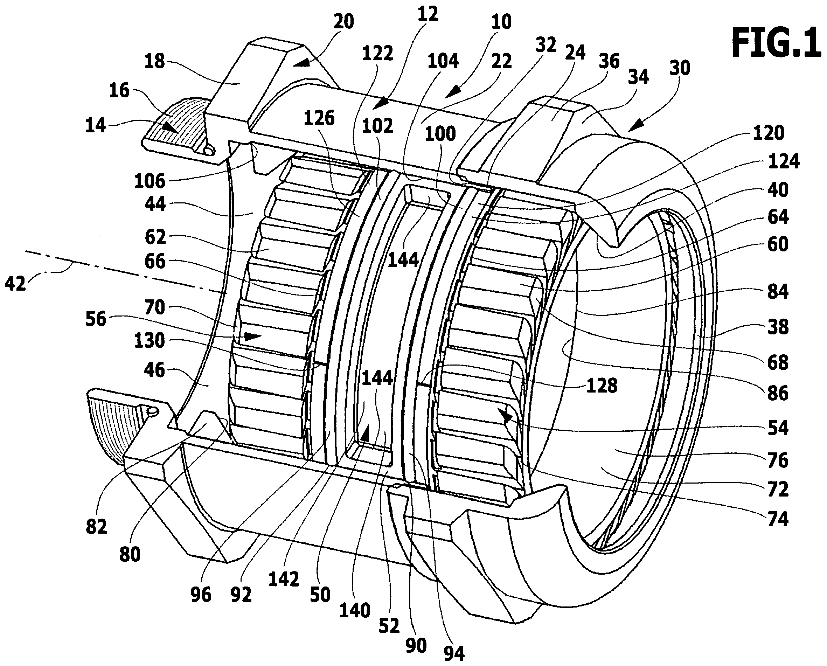

Ein erstes Ausführungsbeispiel einer erfindungsgemäßen Kabelverschraubung, dargestellt in Fig. 1 umfasst eine als Ganzes mit 10 bezeichnete Gehäuseeinheit, die eine Gehäusehülse 12 aufweist, welche an einem Ende mit einem Montageansatz 14 versehen ist, der mittels eines Gewindes 16 in eine Wand, beispielsweise eines Gehäuses, einschraubbar ist.

Im Anschluss an den Montageansatz 14 ist die Gehäusehülse 12 mit einem Schlüsselflächen 18 umfassenden Kranz 20 versehen und auf einer dem Montageansatz 14 gegenüberliegenden Seite des Kranzes 20 erstreckt sich ein Hülsenabschnitt 22, welcher an seinem dem Kranz 20 abgewandten Ende ein Außengewinde 24 trägt, auf welche eine als Ganzes mit 30 bezeichnete Hutmutter mit einem Innengewinde 32 aufschraubbar ist.

Die Hutmutter 30 umfasst ebenfalls einen Kranz 34 mit Schlüsselflächen 36 sowie eine dem Innengewinde 32 gegenüberliegende endseitige Öffnung 38, an welche sich ein Innenkonus 40 anschließt, welcher zwischen der Öffnung 38 und dem Innengewinde 32 im Inneren der Hutmutter 30 liegt.

Die Gehäusehülse 12 sowie die Hutmutter 30 sind vorzugsweise rotationssymmetrisch zu einer Mittelachse 42 der Gehäuseeinheit ausgebildet, wobei auch die Innenkonusfläche 40 rotationssymmetrisch zur Mittelachse 42 verläuft.

Die Gehäusehülse 12 sowie die Hutmutter 30 umschließen einen zwischen der Innenkonusfläche 40 und dem Montageansatz 14 liegenden Innenraum 44 der Gehäuseeinheit 10, welcher einerseits über die endseitige Öffnung 38 der Hutmutter 30 sowie andererseits über eine vom Montageansatz 14 umschlossene endseitige Öffnung 46 von außen zugänglich ist.

In dem Innenraum 44 der Gehäuseeinheit 10 ist eine als Ganzes mit 50 bezeichnete Halteeinheit vorgesehen, welche eine Führungshülse 52 umfasst, die sich ebenfalls koaxial zur Mittelachse 42 erstreckt und an welcher sich auf gegenüberliegenden Seiten zwei sich ebenfalls parallel zur Mittelachse 42 erstreckende Lamellenkörbe 54 und 56 anschließen, die aus einzelnen mit Abstand nebeneinandersitzenden Lamellen 60 und 62 gebildet sind, deren Lamellenfuß 64 bzw. 66 jeweils an der Führungshülse 52 gehalten ist und deren Lamellenende 68 bzw. 70 der endseitigen Öffnung 38 in der Hutmutter 30 bzw. der Öffnung 46 in dem Montageansatz 14 zugewandt und somit in radialer Richtung zur Mittelachse 42 beweglich ist.

In jedem der Lamellenkörbe 54 bzw. 56 sitzt ein Klemmdichtring 72 aus elastischem Material, dessen Außenfläche 74 durch die jeweiligen Lamellen 60 bzw. 62 beaufschlagt ist und dessen Innenfläche 76 an einen Mantel eines in Richtung der Mittelachse 42 durch die Halteeinheit 50 hindurchgeführten Kabels anlegbar und anpressbar ist.

Um den jeweiligen Klemmdichtring 72 bezüglich der Mittelachse 42 radial nach innen zu beaufschlagen, sind die Lamellen 60 mit ihren Lamellenenden 68 an der Innenkonusfläche 40 der Hutmutter 30 anlegbar und durch die Innenkonusfläche 40 beim Aufschrauben der Hutmutter 30 und somit axialer Bewegung der Innenkonusfläche 40 in Richtung des Montageansatzes 14 radial zur Mittelachse 42 nach innen bewegbar, so dass durch die Lamellen 60 auch die Innenfläche 76 des Klemmdichtring 72 radial zur Mittelachse 42 nach innen bewegbar ist, um ein sich durch den Klemmdichtring 72 hindurcherstreckendes Kabel an seinen Mantel zu klemmen.

Darüber hinaus ist in der Gehäuseeinheit 10 ein eine Innenkonusfläche 80 tragender Keilring 82 vorgesehen, welcher nahe des Montageansatzes 14, vorzugsweise in Höhe des Kranzes 20, sitzt, so dass die Lamellenenden 70 der Lamellen 62 an der Innenkonusfläche 80 anlegbar sind und bei einem Verschieben des Lamellenkorbes 56 in Richtung des Keilrings 82 die Lamellenenden 70 der Lamellen 62 bezüglich der Mittelachse 44 radial nach innen bewegbar sind, um den in diesem Lamellenkorb 56 sitzenden Klemmdichtring 72 ebenfalls radial zur Mittelachse 42 nach innen zu beaufschlagen und mit seiner Innenfläche 76 an dem Mantel eines durch die Halteeinheit 50 hindurchgeführten Kabels anzulegen.

Um die Klemmdichtringe 72 beider Lamellenkörbe 54 und 56 gleichzeitig radial zur Mittelachse 42 nach innen durch die Lamellen 60 bzw. 62 beaufschlagen zu können, ist die gesamte Halteeinheit 50 mitsamt der Führungshülse 52 und den Lamellenkörben 54 und 56 in Richtung der Mittelachse 42 frei verschiebbar in dem Innenraum 44 der Gehäuseeinheit 10 angeordnet.

Durch Aufschrauben der Hutmutter 30 auf die Gehäusehülse 12 lässt sich somit bei festsitzendem Keilring 82 der Abstand zwischen der Innenkonusfläche 40, der Hutmutter 30 und der Innenkonusfläche 80 des Keilrings 82 verkürzen, so dass bei Beaufschlagung der Lamellen 60 durch die Innenkonusfläche 40 eine Verschiebung der Halteeinheit 50 im Sinne einer Zentrierung derselben zwischen den Innenkonusflächen 40 und 80 erfolgt und somit bewegen sich die Lamellen 60 bzw. 62 beider Lamellenkörbe 54 bzw. 56 gleichzeitig durch die Innenkonusflächen 40 bzw. 80 radial zur Mittelachse 42, vorzugsweise in gleichem Maße, nach innen, um die jeweiligen Klemmdichtringe 72 radial zur Mittelachse 42 nach innen zu bewegen und an dem Mantel eines durch die Klemmdichtringe 72 der Lamellenkörbe 54 und 56 hindurchgeführten Kabels anzulegen.

Damit ist nicht nur das Kabel durch die Klemmdichtringe 72 der Lamellenkörbe 54 und 56 mechanisch fixierbar, sondern es ist gleichzeitig die Möglichkeit geschaffen, einen dichten Abschluss zwischen dem Kabelmantel und den jeweiligen Klemmdichtring 72 des jeweiligen Lamellenkorbs 54 und 56 zu erreichen.

Außerdem liegen die Klemmdichtringe 72 mit ihren inneren Endseiten 86 an Abdichtnasen 84 der Führungshülse 52 dicht abschließend an, so dass auch ein dichter Abschluss zwischen dem jeweiligen Klemmdichtring 72 des jeweiligen Lamellenkorbs 54 bzw. 56 und der Führungshülse 52 erfolgt.

Um zwischen der Halteeinheit 50 und der Gehäuseeinheit 10 ebenfalls einen dichten Abschluss zu erhalten, ist die Führungshülse 52 mit in Richtung der Mittelachse 42 im Abstand voneinander angeordneten Aufnahmen 90 und 92 versehen, in welche Dichtelemente 94 bzw. 96, vorzugsweise Dichtringe, einsetzbar sind, die einerseits in den Aufnahmen 90 bzw. 92, die beispielsweise als umlaufende Nuten ausgebildet sind, dicht abschließend sitzen und andererseits mit einer bezüglich der Mittelachse 42 radial außenliegenden Dichtfläche 100 bzw. 102 an einer Innenfläche 104 der Gehäusehülse 12 anliegen, wobei sich die Innenfläche 104 in der Gehäusehülse 12 von dem Außengewinde 24 bis zu einer in Höhe des Kranzes 20 vorgesehenen Schulter 106 erstreckt, an welcher der Keilring 82 anliegt und gegen eine weitere Bewegung in Richtung des Montageansatzes 14 abgestützt ist.

Die Innenfläche 104 ist dabei bezüglich der Mittelachse 42 als zylindrische Fläche ausgebildet, so dass die Dichtelemente 94 bzw. 96 mit ihren Dichtflächen 100 bzw. 102 in Richtung der Mittelachse 42 an der Innenfläche 104 entlanggleiten können unter Aufrechterhaltung eines dichten Abschlusses zwischen der Halteeinheit 50, den Dichtelementen 94 und 96 sowie der Gehäusehülse 12.

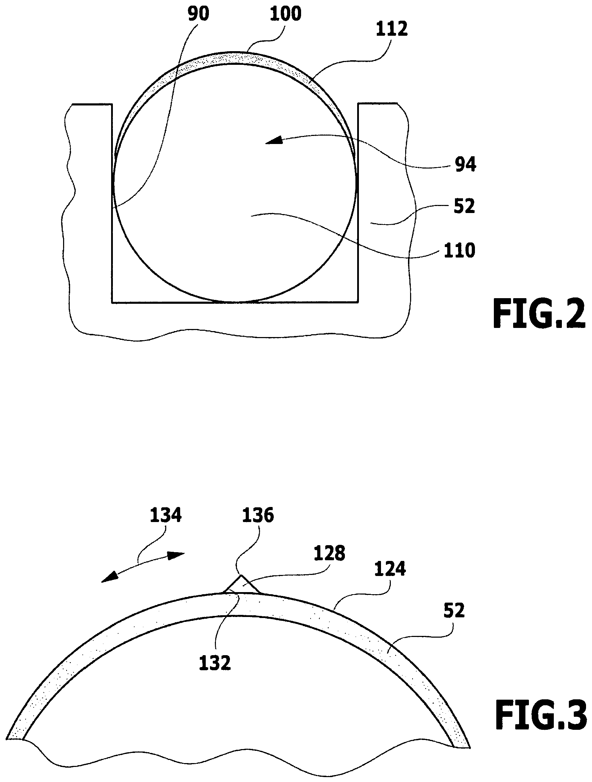

Wie in Fig. 2 exemplarisch am Beispiel des Dichtelements 94 dargestellt ist, umfassen die Dichtelemente 94, 96 einen weichelastischen Kern 110 und dieser ist zumindest auf seiner über die jeweilige Aufnahme 90, 92 überstehenden und die Dichtflächen 100 bzw. 102 bildenden Seite mit einer Gleitschicht 112 aus PTFE versehen, die einerseits weich genug ist, um mit der Innenfläche 104 noch einen dichten Abschluss zu gewährleisten, andererseits jedoch ein Gleiten des jeweiligen Dichtelements 94 bzw. 96 längs der Innenfläche 104 dadurch erleichtert, dass die Reibung zwischen der Innenfläche 104 und dem jeweiligen Dichtelement 94 bzw. 96 reduziert ist.

Ferner sind die Dichtelemente 94, 96 so dimensioniert, dass der Kern 110 derselben beim Einführen der Halteeinheit 50 in die Gehäusehülse 12 deformiert wird und somit die jeweilige Dichtfläche 100 bzw. 102 radial nach außen kraftbeaufschlagt an die Innenfläche 104 der Gehäusehülse 12 anlegt.

Um die Führungshülse 52 nicht nur über die Dichtelemente 94, 96 an der Gehäusehülse 12 abzustützen sondern, die Führungshülse 52 zusätzlich direkt mechanisch unmittelbar an der Innenfläche 104 abzustützen, ist jeweils in Richtung parallel zur Mittelachse 42 zwischen der Aufnahme 90 bzw. 92 der Führungshülse 52 und dem entsprechenden auf diese folgenden Lamellenkorb 54 bzw. 56 an der Führungshülse 52 eine Stützschulter 120 bzw. 122 vorgesehen, die Außenflächen 124 bzw. 126 aufweisen, welche einen geringfügig geringeren Durchmesser als die Innenfläche 104 aufweisen.

Zur direkten Abstützung der Stützschultern 120 bzw. 122 an der Innenfläche 104 sind die Außenflächen 124 bzw. 126 mit Erhebungen 128 bzw. 130 versehen, die, wie in Fig. 3 dargestellt, sich radial zur Mittelachse 42 nach außen erstrecken, jedoch aufgrund ihrer Dimensionierung mechanisch teilweise abtragbar sind, nämlich dann, wenn die Halteeinheit 50 in die Gehäusehülse 12 eingeschoben wird, so dass sich die Erhebungen 128, 130 hinsichtlich ihrer Erstreckung radial zur Mittelachse 42 an den exakten Durchmesser der Innenfläche 104 durch mechanischen Abtrag selbstständig anpassen können und damit die Stützschultern 120 bzw. 122 passgenau an der Innenfläche 104 abstützen.

Vorzugsweise weisen die Erhebungen 128, 130 einen in einer Umfangsrichtung 134 der Stützschultern 120, 122 verbreiterten Fußbereich 132 auf, von welchem ausgehend sich die Erstreckung der Erhebungen 128 bzw. 130 in Umfangsrichtung 134 reduziert, so dass in einem Spitzenbereich 136 der Erhebungen 128, 130 eine minimale Erstreckung in der Umfangsrichtung 134 vorliegt.

Damit lassen sich die Erhebungen 128, 130 beim Einschieben der Halteeinheit 50 in die Gehäusehülse 12, insbesondere den Hülsenabschnitt 22 im Bereich ihrer Spitze 136 leichter abtragen, als im Fußbereich 132, so dass dadurch sichergestellt ist, dass jede der Erhebungen 128, 130 nur in dem minimal notwendigen Maß abgetragen wird, so dass die jeweilige Stützschulter 120 bzw. 122 passgenau in der Innenfläche 104 von den Erhebungen 128 bzw. 130 unmittelbar an der Stützfläche 104 abgestützt gehalten und geführt ist.

Die Erhebungen 128, 130 haben außerdem noch den Vorteil, dass sie dann, wenn sie sich insbesondere rippenähnlich in einer zur Mittelachse 42 parallel verlaufenden Richtung erstrecken, eine geringe Reibung mit der Innenfläche 104 aufweisen, so dass damit ebenfalls zusätzlich zu einer stabilen Abstützung ein Gleiten der Stützschultern 120, 122 mit möglichst geringem Reibungswiderstand möglich ist.

Auf der jeweils den Stützschultern 120 bzw. 122 gegenüberliegenden Seite der Dichtelemente 94, 96 und der Aufnahme 90, 92 ist die Führungshülse 52 noch mit einem Zwischenbereich 140 versehen, der abschnittsweise in radialer Richtung zur Mittelachse 42 verdünnt ausgeführte Wandbereiche 142 aufweist, die sich mit in Richtung parallel zur Mittelachse 42 erstreckenden Stützstegen 144 abwechseln, so dass im Zwischenbereich 140 einerseits eine ausreichende Stabilität zur Abstützung der Lamellenkörbe 54, 56 gegeneinander, insbesondere bei angeschraubter Hutmutter 30 vorhanden ist, andererseits ein Verzug bei der Herstellung der Führungshülse 52 vermieden werden kann, da die verdünnten Bereiche 142 mit den Zwischenstegen 144 eine verzugsfreie und stabile Kunststoffkonfiguration, insbesondere bei Herstellung der Führungshülse 52 aus Kunststoff, erlauben.

Ferner wird bei der erfindungsgemäßen Anordnung der Stützschultern 120 bzw. 122 möglichst unmittelbar angrenzend an die Lamellenkörbe 54, 56 durch die Stützschultern 120 bzw. 122 mit ihren Erhebungen 128, 130 eine in möglichst großem Abstand in Richtung der Mittelachse 42 erfolgende optimale Abstützung des Halteteils 50 innerhalb der Gehäusehülse 12, insbesondere innerhalb des Hülsenabschnitts 22 gewährleistet.

Dies wirkt sich insbesondere positiv auf die Qualität der Abdichtung zwischen den Dichtelementen 94, 96 sowie der Innenfläche 104 aus, da damit die durch die Deformation des weichelastischen Kerns 110 erzeugte Kraft in den Dichtelementen 94, 96 gleichmäßig groß ist und somit eine gleichmäßige Anpressung der Dichtflächen 100, 102 erhältlich ist.

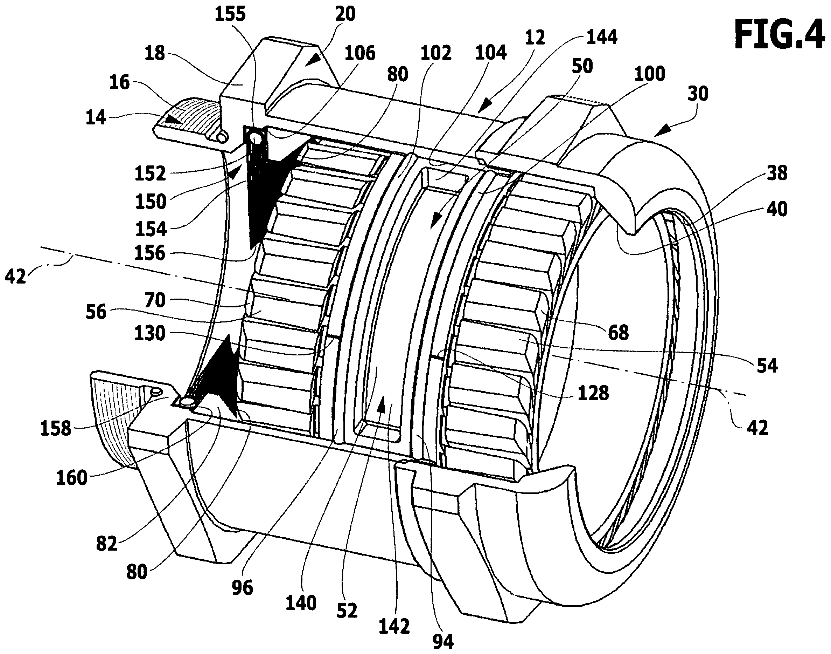

Bei einem zweiten Ausführungsbeispiel einer erfindungsgemäßen Kabelverschraubung, dargestellt in Fig. 4, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel ist bei dem zweiten Ausführungsbeispiel noch ein als Ganzes mit 150 bezeichnetes Schirmkontaktelement vorgesehen, welches einen ringförmigen Träger 152 aufweist, von welchem ausgehend Kontaktborsten 154 sich radial zur Mittelachse 42 nach innen erstrecken und eine zentrale Öffnung 156 des Schirmkontaktelements 150 mit ihren vorderen Enden begrenzen.

Die Kontaktborsten 154 sind vorzugsweise durch ein Flachmaterial 155 fixiert, welches den ringförmigen Träger 152 und die um diesen im Wesentlichen U-förmig gelegten Kontaktborsten 154 ebenfalls U-förmig übergreift, so dass sich beiderseits des Trägers 152 die Kontaktborsten 154 erstrecken.

Vorzugsweise sitzt der Träger 152 zwischen dem Keilring 82 und einem den Montageansatz 14 tragenden Flansch 158 der Gehäusehülse 12, welcher vorzugsweise im Bereich des Kranzes 20 an diese angeformt ist. Somit ist der Träger 152 mit dem um diesen gelegten und die Kontaktborsten 154 tragenden Flachmaterial zwischen dem Keilring 82 und dem Flansch 158 fixiert, wobei vorzugsweise der Keilring 82 bei diesem Ausführungsbeispiel nicht auf der Schulter 106 voll aufliegt, sondern in geringem Abstand von der Schulter 106 positioniert ist, so dass die auf den Keilring 82 in Richtung der Mittelachse 42 und in Richtung des Montageansatzes 14 wirkende Kraft dazu ausgenutzt werden kann, den Träger 152 mit dem um diesen gelegten und die Kontaktborsten 154 bildenden Flachmaterial zwischen dem Keilring 82 und dem Flansch 158 einzuklemmen, nämlich dann, wenn die Hutmutter 30 auf die Gehäusehülse 12 aufgeschraubt wird und damit die Halteeinheit 50 einerseits mit dem Lamellenkorb 54 an der Innenkonusfläche 40 anliegt und andererseits mit den Lamellen 56 an der Innenkonusfläche 80 des Keilrings 82 anliegt und auf diese drückt.

Ferner ist vorzugsweise der Träger 152 als in seiner Umfangsrichtung gestützter Ring ausgebildet und wirkt radial nach außen federnd, so dass der Träger 152 mit dem um diesen gelegten und die Kontaktborsten 154 bildenden Flachmaterial auch in radialer Richtung zur Mittelachse 154 nach außen an einer Anlagefläche 160 der Gehäusehülse 12 anliegt, die aufgrund der Schulter 106 ein geringfügig geringeren Durchmesser als die Innenfläche 104 der Gehäusehülse 12 aufweist.

Mit dem Schirmkontaktelement 150 besteht somit noch zusätzlich die Möglichkeit, einen Kabelschirm eines durch die erfindungsgemäße Kabeldurchführung hindurchgeführten und von dieser klemmend gehaltenen Kabels zu kontaktieren und eine elektrisch leitende Verbindung zwischen der beispielsweise elektrisch leitend ausgebildeten Gehäusehülse 12 und dem Kabelschirm mittels des Schirmkontaktelements 150 herzustellen.

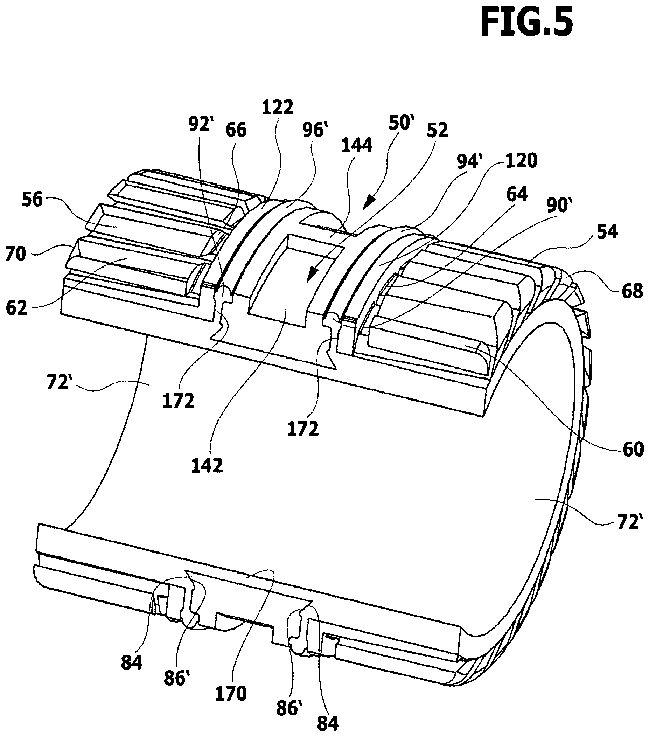

Bei einem dritten Ausführungsbeispiel einer erfindungsgemäßen Kabelverschraubung ist die in Fig. 5 dargestellte Halteeinheit 50' hinsichtlich der Ausbildung der Führungshülse 52 sowie der Lamellenkörbe 54 und 56 in gleicher Weise wie beim ersten und zweiten Ausführungsbeispiel aufgebaut und ausgebildet.

Im Gegensatz zum ersten und zweiten Ausführungsbeispiel sind die Klemmdichtringe 72', die in den Lamellenkörben 54, 56 angeordnet sind, keine einzelnen Klemmdichtringe, sondern über ein Verbindungsstück 170 miteinander verbunden, welches sich zwischen inneren Endseiten 86' der Klemmdichtringe 72' erstreckt, und dabei in Richtung parallel zur Mittelachse 42 innerhalb der Führungshülse 52 verläuft.

Insbesondere bilden die Klemmdichtringe 72' mit dem Verbindungsstück 170 ein um die Mittelachse 46 umlaufend geschlossenes und auch in Richtung der Mittelachse 46 zusammenhängend geschlossenes hülsenähnliches Teil, welches das durchgeführte Kabel umschließt und jeweils im Bereich der beiden Klemmdichtringe dicht abschließend an dem Kabel anlegbar ist, so dass damit eine optimale Abdichtung zum Kabel hin erreichbar ist.

Vorzugsweise sind die beiden Klemmdichtringe 72' mitsamt dem Verbindungsstück 170 durch ein Zwei-Komponentenspritzverfahren an die Lamellen 60, 62 der Lamellenkörbe 54, 56 und die Führungshülse 52 angeformt und somit an diesen fixiert, wobei dies die Funktion der Klemmdichtringe 72' nicht beeinträchtigt, so dass die Klemmdichtringe 72' in den Lamellenkörben 54, 56 in gleicher Weise wirksam sind wie beim ersten und zweiten Ausführungsbeispiel, allerdings mit dem Unterschied, dass deren Herstellung als Teil der Halteeinheit 50' vereinfacht ist.

Durch die Fixierung des Verbindungsstücks 170 in der Führungshülse 52 aufgrund des Anformens an diese ist auch eine optimale Abdichtung zwischen den Klemmdichtringen 72' und der Führungshülse 52 gegeben.

Darüber hinaus sind vorzugsweise im Bereich der Aufnahmen 90' und 92' für die Dichtelemente 94' und 96' Durchbrüche 172 vorgesehen, welche auch eine Herstellung der Dichtelemente 94' und 96' in den Aufnahmen 90' und 92' im Rahmen eines Zwei-Komponentenspritzverfahrens und zwar zusammenhängend mit den Klemmdichtringen 72' und dem Verbindungsstück 170 erlauben, so dass die Dichtelemente 94' und 96' aus demselben Material herstellbar sind, wie die Klemmdichtringe 72' und das Verbindungsstück 170.

Der Vorteil einer Halteeineinheit 50' gemäß dem dritten Ausführungsbeispiel ist darin zu sehen, dass diese in einfacher Weise automatisiert herstellbar ist, da die Klemmdichtringe 72' nicht in die Lamellenkörbe 54, 56 als fertige Teile eingesetzt werden müssen.

Außerdem hat dieses Ausführungsbeispiel den Vorteil, dass damit eine verbesserte Abdichtung zwischen dem die Halteeinheit 50' durchsetzenden und von dieser geklemmten Kabel und der Halteeinheit 50', insbesondere der Führungshülse 52 möglich ist als beim ersten und zweiten Ausführungsbeispiel, da die beiden Klemmdichtringe 72' durch das Verbindungsstück 170 auch dicht abschließend miteinander verbunden sind.

Im Übrigen sind bei dem dritten Ausführungsbeispiel diejenigen Elemente, die mit denen des ersten Ausführungsbeispiels identisch sind, mit denselben Bezugszeichen versehen, so dass auf die Ausführungen zum ersten Ausführungsbeispiel Bezug genommen wird.

## Patentansprüche

1. Kabelverschraubung umfassend
eine Gehäuseeinheit (10) mit einer Gehäusehülse (12) und mit einer auf die Gehäusehülse (12) aufschraubbaren Hutmutter (30) und eine in der Gehäuseeinheit (10) angeordnete Halteeinheit (50) mit einer Führungshülse (52), mit mindestens einem sich ausgehend von der Führungshülse (52) erstreckenden Lamellenkorb (54, 56) und mit einer in dem Lamellenkorb (54, 56) sitzenden und von diesem beaufschlagbaren Klemmdichtring (72) aus einem elastischem Material, welche an einem durch die Gehäuseeinheit (10) und die Halteeinheit (50) hindurchgeführten Kabel bei Beaufschlagung der Halteeinheit (50) mittels der Gehäuseeinheit (10) dicht abschließend und klemmend anlegbar ist, wobei die Halteeinheit (50) zwei Lamellenkörbe (54, 56) aufweist, die sich auf gegenüberliegenden Seiten der Führungshülse (52) ausgehend von dieser in entgegengesetzten Richtungen parallel zu einer Mittelachse (42) der Gehäuseeinheit (10) erstrecken und die beide durch die Gehäuseeinheit (10) beaufschlagbar sind, wobei in jedem Lamellenkorb (54, 56) ein elastischer Klemmdichtring (72) sitzt, der durch den jeweiligen Lamellenkorb (54, 56) radial zur Mittelachse (42) in Richtung des durchgeführten Kabels beaufschlagbar ist, und wobei die Führungshülse (52) mit einem radial wirkenden Dichtelement (94, 96) versehen ist, das mit einer Dichtfläche (100, 102) an einer zylindrischen Innenfläche (104) der Gehäusehülse (12) dicht abschließend anlegbar ist.

2. Kabelverschraubung nach Anspruch 1, **dadurch gekennzeichnet, dass** die Halteeinheit (50) in Richtung einer Mittelachse (42) der Gehäuseeinheit (10) verschiebbar in der Gehäuseeinheit (10) angeordnet ist.

3. Kabelverschraubung nach einem der voranstehenden Ansprüche, **dadurch gekennzeichnet, dass** die Halteeinheit (50) zwischen jeweils auf einen der Lamellenkörbe (54, 56) wirkenden Druckflächen (40, 80) der Gehäuseeinheit (10) angeordnet ist und sich entsprechend eines Abstandes der Druckflächen (40, 80) in Richtung parallel zur Mittelachse (42) zwischen diesen ausrichtet.

4. Kabelverschraubung nach einem der voranstehenden Ansprüche, **dadurch gekennzeichnet, dass** die Klemmdichtringe (72) mit der Führungshülse (52) dichtend abschließen.

5. Kabelverschraubung nach einem der voranstehenden Ansprüche, **dadurch gekennzeichnet, dass** die Klemmdichtringe (72') durch ein Verbindungsstück (170) miteinander verbunden sind.

6. Kabelverschraubung nach einem der voranstehenden Ansprüche, **dadurch gekennzeichnet, dass** das Dichtelement (94, 96), mit einer die Dichtfläche (100, 102) tragenden Gleitbeschichtung (112) versehen ist.

7. Kabelverschraubung nach einem der voranstehenden Ansprüche, **dadurch gekennzeichnet, dass** die Führungshülse (52) mit zwei radial wirkenden Dichtelementen (94, 96) dicht abschließend an der Innenfläche (104) der Gehäusehülse (12) anlegbar ist.

8. Kabelverschraubung nach einem der voranstehenden Ansprüche, **dadurch gekennzeichnet, dass** die Halteeinheit (50) durch in radialer Richtung zur Mittelachse (42) über die Führungshülse (52) überstehende Erhebungen (128, 130) in der Gehäusehülse (12) geführt ist.

9. Kabelverschraubung nach Anspruch 8, **dadurch gekennzeichnet, dass** die Erhebungen (128, 130) an der für das mindestens eine Dichtelement (94, 96) als Anlagefläche dienenden zylindrischen Innenfläche (104) der Gehäusehülse (12) anliegen.

10. Kabelverschraubung nach Anspruch 8 oder 9, **dadurch gekennzeichnet, dass** die Erhebungen (128, 130) aus einem beim Einführen der Halteeinheit (50) in die Gehäuseeinheit (10) sich an eine Form der Innenfläche (104) durch Abtrag und/oder Deformation anpassenden Material sind.

11. Kabelverschraubung nach einem der voranstehenden Ansprüche, **dadurch gekennzeichnet, dass** in der Gehäuseeinheit (10) ein Schirmkontaktelement (150) angeordnet ist.

12. Kabelverschraubung nach Anspruch 11, **dadurch gekennzeichnet, dass** das Schirmkontaktelement (150) in einer Aufnahme (158, 160) angeordnet ist, die nahe einem Montageansatz (14) der Gehäusehülse (12) vorgesehen ist.

13. Kabelverschraubung nach einem der voranstehenden Ansprüche, **dadurch gekennzeichnet, dass** die Klemmdichtringe (72) in den Lamellenkörben (54, 56) beim Zusammenwirken der Gehäuseeinheit (10) und der Halteeinheit (50) ein elastisches, die Klemmung und Dichtung aufrecht erhaltendes Element bilden.

14. Kabelverschraubung nach Anspruch 13, **dadurch gekennzeichnet, dass** die Klemmdichtringe (72) die einzigen elastischen Elemente beim Zusammenwirken der Gehäuseeinheit (10) und der Halteeinheit (50) bilden.

## Claims

1. Cable connection comprising
a housing unit (10) with a housing sleeve (12) and a cap nut (30) screwable onto the housing sleeve (12)
and a fixing unit (50) arranged in the housing unit (10) and having a guide sleeve (52), at least one rib cage (54, 56) extending from the guide sleeve (52) and a clamping seal ring (72) consisting of an elastic material, seated in the rib cage (54, 56) and being actable upon thereby, said seal ring being capable to be assigned when the fixing unit (50) is acted upon by means of the housing unit (10) to a cable, which is guided through the housing unit (10) and the fixing unit (50), in a sealingly closed and clamping manner, wherein the fixing unit (50) has two rib cages (54, 56) extending on opposite sides of the guide sleeve (52) proceeding therefrom in opposite directions parallel to a central axis (42) of the housing unit (20) and both being actable upon by the housing unit (10), wherein an elastic clamping seal ring (72) is seated in each rib cage (54, 56) and each of that clamping seal ring (72) is actable upon by the respective rib cage (54, 56) radially to the central axis (42) in the direction of the cable guided through, and wherein the guide sleeve (52) is provided with a radially acting sealing element (94, 96) which is capable to be assigned to a sealing surface (100, 102) on a cylindrical inner surface (104) of the housing sleeve (12) in a sealingly closed manner.

2. Cable connection as defined in claim 1, **characterized in that** the fixing unit (50) is arranged so as to be displaceable in the housing unit (10) in the direction of a central axis (42) of the housing unit (10).

3. Cable connection as defined in either one of the preceding claims, **characterized in that** the fixing unit (50) is arranged between pressure surfaces (40, 80) of the housing unit (10) each acting on one of the rib cages (54, 56) and is aligned between them in accordance with a distance between the pressure surfaces (40, 80) in the direction parallel to the central axis (42).

4. Cable connection as defined in any one of the preceding claims, **characterized in that** the clamping seal rings (72) abut sealingly on the guide sleeve (52).

5. Cable connection as defined in any one of the preceding claims, **characterized in that** the clamping seal rings (72') are connected to one another by a connector (170).

6. Cable connection as defined in any one of the preceding claims, **characterized in that** the sealing element (94, 96) is provided with an anti-friction coating (112) bearing the sealing surface (100, 102).

7. Cable connection as defined in any one of the preceding claims, **characterized in that** the guide sleeve (52) is capable to be assigned with two radially acting sealing elements (94, 96) to the inner surface (104) of the housing sleeve (12) in a sealingly closed manner.

8. Cable connection as defined in any one of the preceding claims, **characterized in that** the fixing unit (50) is guided in the housing sleeve (12) by raised sections (128, 130) projecting beyond the guide sleeve (52) in a radial direction relative to the central axis (42).

9. Cable connection as defined in claim 8, **characterized in that** the raised sections (128, 130) abut on the cylindrical inner surface (104) of the housing sleeve (12) which serves as a contact surface for the at least one sealing element (94, 96).

10. Cable connection as defined in claim 8 or 9, **characterized in that** the raised sections (128, 130) consist of a material adapting to a shape of the inner surface (104) by way of removal of material and/or deformation when the fixing unit (50) is inserted into the housing unit (10).

11. Cable connection as defined in any one of the preceding claims, **characterized in that** a shield contact element (150) is arranged in the housing unit (10).

12. Cable connection as defined in claim 11, **characterized in that** the shield contact element (150) is arranged in a receptacle (158, 160) provided close to a mounting attachment (14) of the housing sleeve (12).

13. Cable connection as defined in any one of the preceding claims, **characterized in that** the clamping seal rings (72) form an elastic element maintaining the clamping and sealing in the rib cages (54, 56) during the interaction of the housing unit (10) and the fixing unit (50).

14. Cable connection as defined in claim 13, **characterized in that** the clamping seal rings (72) constitute the only elastic elements during the interaction of the housing unit (10) and the fixing unit (50).

## Revendications

1. Raccord à vis pour câble comprenant
une unité formant boîtier (10) avec une douille de boîtier (12) et avec un écrou borgne (30) pouvant être installé par vissage sur la douille de boîtier (12)
et une unité de maintien (50) disposée dans l'unité formant boîtier (10) avec une douille de guidage (52), avec au moins un panier de lamelles (54, 56) s'étendant en partant de la douille de guidage (52) et avec une bague d'étanchéité de serrage (72) siégeant dans le panier de lamelles (54, 56) et pouvant être contrainte par celui-ci, composée d'un matériau élastique, laquelle peut être placée lorsque l'unité de maintien (50) est contrainte au moyen de l'unité formant boîtier (10) de manière hermétiquement étanche et serrée au niveau d'un câble guidé à travers l'unité formant boîtier (10) et l'unité de maintien (50) dans lequel l'unité de maintien (50) présente deux paniers de lamelles (54, 56), qui s'étendent sur des côtés opposés de la douille de guidage (52) en partant de celle-ci dans des directions opposées de manière parallèle par rapport à un axe central (42) de l'unité formant boîtier (10) et lesquels peuvent être contraints par l'unité formant boîtier (10), dans lequel siège, dans chaque panier de lamelles (54, 56), une bague d'étanchéité de serrage (72) élastique, qui peut être contrainte par le panier de lamelles (54, 56) respectif de manière radiale par rapport à l'axe central (42) en direction du câble guidé au travers, et dans lequel la douille de guidage (52) est pourvue d'un élément d'étanchéité (94, 96) agissant radialement, qui peut être placé de manière hermétiquement étanche avec une surface d'étanchéité (100, 102) au niveau d'une surface intérieure (104) cylindrique de la douille de boîtier (12).

2. Raccord à vis pour câble selon la revendication 1, **caractérisé en ce que** l'unité de maintien (50) est disposée dans l'unité formant boîtier (10) de manière à pouvoir être coulissée en direction d'un axe central (42) de l'unité formant boîtier (10).

3. Raccord à vis pour câble selon l'une quelconque des revendications précédentes,
**caractérisé en ce que** l'unité de maintien (50) est disposée entre des surfaces de pression (40, 80), agissant respectivement sur un des paniers de lamelles (54, 56), de l'unité formant boîtier (10) et s'oriente conformément à une distance des surfaces de pression (40, 80) dans une direction parallèle par rapport à l'axe central (42) entre celles-ci.

4. Raccord à vis pour câble selon l'une quelconque des revendications précédentes,
**caractérisé en ce que** les bagues d'étanchéité de serrage (72) avec la douille de guidage (52) sont hermétiquement étanches.

5. Raccord à vis pour câble selon l'une quelconque des revendications précédentes,
**caractérisé en ce que** les bagues d'étanchéité de serrage (72') sont reliées les unes aux autres par une pièce de liaison (170).

6. Raccord à vis pour câble selon l'une quelconque des revendications précédentes,
**caractérisé en ce que** l'élément d'étanchéité (94, 96) est pourvu d'un revêtement glissant (112) supportant la surface d'étanchéité (100, 102).

7. Raccord à vis pour câble selon l'une quelconque des revendications précédentes,
**caractérisé en ce que** la douille de guidage (52) peut être placée avec deux éléments d'étanchéité (94, 96) agissant radialement de manière hermétiquement étanche au niveau de la surface intérieure (104) de la douille de boîtier (12).

8. Raccord à vis pour câble selon l'une quelconque des revendications précédentes,
**caractérisé en ce que** l'unité de maintien (50) est guidée dans la douille de boîtier (12) par des parties surélevées (128, 130) dépassant de la douille de guidage (52) dans une direction radiale par rapport à l'axe central (42).

9. Raccord à vis pour câble selon la revendication 8, **caractérisé en ce que** les parties surélevées (128, 130) reposent au niveau de la surface intérieure (104) cylindrique, servant de surface d'appui pour l'au moins un élément d'étanchéité (94, 96), de la douille de boîtier (12).

10. Raccord à vis pour câble selon la revendication 8 ou 9, **caractérisé en ce que** les parties surélevées (128, 130) sont composées d'un matériau s'adaptant à une forme de la surface intérieure (104) par enlèvement de matériau et/ou par déformation lors de l'introduction de l'unité de maintien (50) dans l'unité formant boîtier (10).

11. Raccord à vis pour câble selon l'une quelconque des revendications précédentes,
**caractérisé en ce qu'**un élément de contact de protection (150) est disposé dans l'unité formant boîtier (10).

12. Raccord à vis pour câble selon la revendication 11, **caractérisé en ce que** l'élément de contact de protection (150) est disposé dans un logement (158, 160), qui est prévu à proximité d'un embout de montage (14) de la douille de boîtier (12).

13. Raccord à vis pour câble selon l'une quelconque des revendications précédentes, **caractérisé en ce que** les bagues d'étanchéité de serrage (72) forment dans les paniers de lamelles (54, 56), lors de la coopération de l'unité formant boîtier (10) et de l'unité de maintien (50), un élément élastique conservant le serrage et l'étanchéité.

14. Raccord à vis pour câble selon la revendication 13, **caractérisé en ce que** les bagues d'étanchéité de serrage (72) forment les seuls éléments élastiques lors de la coopération de l'unité formant boîtier (10) et de l'unité de maintien (50).
